# NEUE EUROPÄISCHE PATENTSCHRIFT

(11) **EP 2 495 117 B2**
(45) Veröffentlichungstag und Bekanntmachung des Hinweises auf die Entscheidung über den Einspruch: **05.06.2024**
(45) Hinweis auf die Patenterteilung: 27.06.2018
(21) Anmeldenummer: 12156620.2
(22) Anmeldetag: 23.02.2012
(51) Int. Cl.: B60G 7/02

(54) **Abstützung zur schwenkbaren Lagerung des Achslenkers einer Fahrzeugachse**
Support for pivotable mounting of the axle guide of a vehicle axle
Soutien de stockage oscillant du guide d'essieu d'un axe de véhicule

(30) Priorität: 01.03.2011 DE 102011001008
(43) Veröffentlichungstag der Anmeldung: 05.09.2012
(73) Patentinhaber: BPW Bergische Achsen KG, 51674 Wiehl (DE)
(72) Erfinder: Gmeiner, Swen, 51709 Marienheide (DE); Michels, Manfred, 51067 Köln (DE); Biegale, Achim, 51588 Nümbrecht (DE)
(74) Vertreter: DREISS Patentanwälte PartG mbB

(56) Entgegenhaltungen:
- WO-A1-00/01547
- WO-A1-03/062663
- DE-A1- 4 109 108
- DE-A1-102006 044 598
- DE-A1-102006 052 218
- DE-U1- 20 011 858
- DE-U1- 20 104 753
- JP-A- 2007 137 087
- US-A1- 2004 056 446

## Beschreibung

Die Erfindung betrifft eine Abstützung zur schwenkbaren Lagerung des Achslenkers einer Fahrzeugachse, mit einem Stützengrundkörper aus zwei über eine in Fahrtrichtung vorne angeordnete Stirnwand miteinander verbundenen Seitenwänden, die jeweils versehen sind mit
- einer Öffnung für einen die Schwenkachse bildenden, quer durch die Seitenwände und den dazwischen einsetzbaren Achslenker hindurchführenden Bolzen,
- einem Randabschnitt, der von dem unteren bis in den rückwärtigen Rand der Seitenwand reicht und als frei auslaufender Wandabschnitt ausgebildet ist.

Eine Abstützung zur schwenkbaren Lagerung eines Achslenkers mit diesen Merkmalen ist aus der DE 201 04 753 U1 bekannt. Derartige Lagerungen dienen zur Übertragung von vor allem beim Einfedern des Fahrzeugs aufgenommenen Belastungen von dem Achslenker über den Stützengrundkörper auf den Fahrzeugrahmen. Der von einer Stahlbuchse oder einer Stahl-Gummi-Buchse umgebene Bolzen dient in der Regel nur der benötigten axialen Einspannung des Achslenkers. Der Bolzen selbst bleibt von den vom Achslenker über die Stahlbuchse auf die Stütze übertragenen Kräften weitgehend oder vollständig entlastet. Damit sich bei der Achsenmontage der Achslenker leichter zwischen den beiden Seitenwänden des Stützengrundkörpers einfügt, ist das Montagemaß zwischen den Seitenwänden ausreichend groß bemessen. In die so nach dem Einsetzen des Achslenkers verbleibenden Spalte werden nachträglich, also in einem zusätzlichen Montageschritt, jeweils Verschleißbleche eingesetzt. Diese werden eingesetzt in die sich ergebenden vertikalen Spalte zwischen dem Achslenker bzw. dessen Auge, und den Seitenwänden der Stütze durch Hineinschieben von unten und/oder von hinten her. Nachteilig ist ferner, dass, um das Hindurchführen des Bolzens durch eine ungenaue Positionierung der Verschleißscheiben nicht zu beeinträchtigen, eine Reihe von konstruktiven Maßnahmen sowohl an den Verschleißscheiben, als auch an der Stütze selber notwendig werden.

Bei einer Abstützung nach der EP 0 504 593 B1 sind innen an den Seitenwänden jeweils Verschleißbleche angeschweißt. Diese Bauweise führt einerseits zu einem erhöhten Fertigungsaufwand durch das zusätzlich erforderliche Einschweißen. Zum anderen besteht die Gefahr, dass beim Absenken der bereits unter dem Fahrzeugchassis befestigten Stütze auf den Achslenker der Fahrzeugachse das Achslenkerauge beim Einfahren in den Stützengrundkörper an den dort bereits befestigten Schweißblechen hängenbleibt, insbesondere wenn diese mit unsauber ausgeführten, hervorstehenden Schweißnähten befestigt sind. Selbst bei nur partieller Verschweißung der Schweißbleche bleibt ein stufiger und damit kantiger Übergang, welcher das hinein Bewegen des Achslenkerauges behindert.
Der Erfindung liegt die **Aufgabe** zugrunde, durch konstruktive Maßnahmen an der der schwenkbaren Lagerung des Achslenkers dienenden Abstützung eine erleichterte Montage des Achslenkers zu erreichen.
Zur **Lösung** dieser Aufgabe wird bei einer Abstützung mit den eingangs angegebenen Merkmalen vorgeschlagen, dass zumindest im Bereich der Randabschnitte die Wandabschnitte zu einem gegenseitigen Abstand aufgeweitet sind, der größer als der Abstand der Seitenwandbereiche um die Öffnungen herum ist und der Stützengrundkörper als Blechformteil ausgebildet ist.
Bei der solcherart ausgebildeten Stütze ist das Einsetzen des Achslenkers in den Stützengrundkörper wegen den größeren Abstandes der Seitenwände im Bereich der Wandabschnitte, und wegen des sich dadurch ergebenden größeren Spiels zu Beginn des Einsetzvorgangs deutlich erleichtert. Dies ist vor allem deshalb von Vorteil, da das Einfügen des relativ schweren Achslenkers zwischen die Seitenwände des als Blechformteil ausgebildeten Stützengrundkörpers häufig ohne maschinelle Hilfe erfolgt und somit nicht so präzise ausgeführt werden kann. Die größere Breitendimensionierung des Stützengrundkörpers zumindest in den "Einfädelungsbereichen" verringert die Gefahr des Anschlagens des Achslenkers gegen die bzw. des Verkantens zwischen den beiden Seitenwänden der Stütze oder dort bereits angebrachten Verschleißblechen.
Es ist nicht erforderlich, das innere Montagemaß der Stütze im Bereich um die Bolzendurchführung mit Übermaß auszuführen und die so entstehenden vertikalen Spalte z.B. durch nachträgliches Hineinschieben von Verschleißscheiben zu schließen.
Erreicht wird insgesamt eine einfachere und somit preiswerte Fertigung frei von zusätzlichen Montageschritten beim Aufsetzen der zumeist bereits unter dem Fahrzeugchassis befestigten Stütze auf den Achslenker.

Zu diesen Erleichterungen trägt weiter bei, dass ein Übergang zwischen den Seitenwandbereichen mit dem kleineren Abstand zu den Wandabschnitten mit dem größeren Abstand ausschließlich abgerundet und kantenlos gestaltet ist. Dieser Übergang stellt ansonsten durch den verringerten gegenseitigen Abstand der Seitenwände eine Verengung, und somit eine potenzielle Gefahrenquelle für ein Verkanten bzw. ein Hängenbleiben des Achslenkers an den Seitenwänden beim Einfügen dar. Durch die abgerundeten und kantenlosen Seitenwände in diesem Bereich wirkt der Übergang durch seine gewissermaßen "weiche" Ausformung wie eine Zentrierhilfe, an der der Achslenker in Richtung zu dem Wandbereich mit verringertem Abstand entlang gleiten kann.

Mit einer Ausgestaltung wird vorgeschlagen, dass die frei auslaufenden Wandabschnitte ausschließlich an Seitenwandbereiche mit dem kleineren Abstand angrenzen. Der Abstand dieser Seitenwandbereiche ist gleich der Länge einer den Bolzen umgebenden Stahlbuchse des Achslenkers.

In einer weiteren Ausgestaltung der Abstützung wird vorgeschlagen, dass die Blechdicke der Seitenwandbereiche und den Wandabschnitten gleich stark ist. Die Verformung der Seitenwände erfolgt durch partielles Tiefziehen des Blechs, vorzugsweise Stahlblechs, aus dem der Grundkörper der Stütze besteht.

Weitere Einzelheiten und Vorteile ergeben sich aus der nachfolgenden Beschreibung, in der auf die zugehörigen Zeichnungen Bezug genommen wird. Darin zeigen:

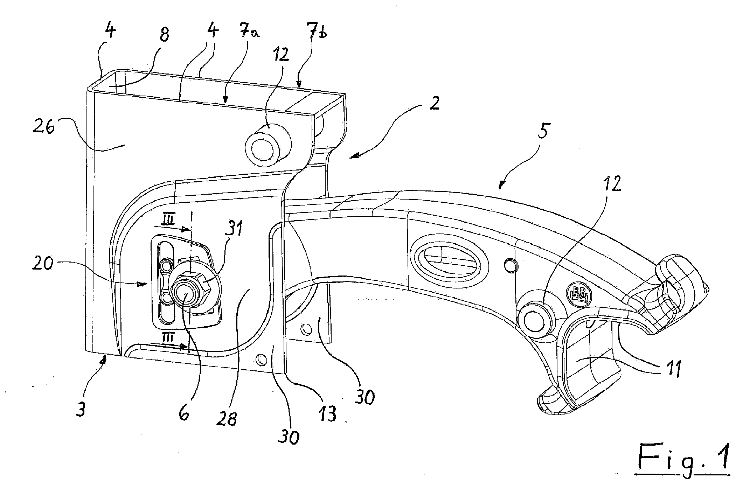

- Fig. 1: in perspektivischer Darstellung eine Abstützung für einen Achslenker einschließlich des Achslenkers einer luftgefederten Fahrzeugachse zum Einsatz in einem Nutzfahrzeuganhänger;
- Fig. 2: in perspektivischer Darstellung ausschließlich den einstückigen Grundkörper der Stütze, und
- Fig. 3: einen Teilschnitt gemäß der Fig. 1 eingezeichneten Schnittebene III - III;

Unter dem Fahrzeugrahmen eines Lkw-Anhängers oder -Aufliegers sind links und rechts jeweils Stützen 2 befestigt, vorzugsweise durch Verschweißen ihres oberen Randes 4 mit der Unterseite der Längsträger des Fahrzeugrahmens. In jeder Abstützung ist, schwenkbar um jeweils einen Gewindebolzen 6, ein Achslenker 5 für die Fahrzeugachse schwenkbar gelagert.

Jeder Achslenker ist als ein Gießteil aus Stahlguss oder Leichtmetallguss ausgebildet. Das vordere Ende jedes Achslenkers 5 ist als Auge gestaltet, in dem eine Stahl-Gummi-Buchse 14 sitzt. Durch diese sowie durch die Seitenwände 7a, 7b der Stütze 2 hindurch erstreckt sich der Bolzen 6. An den rückwärtigen Enden der Achslenker 5 sind jeweils, was die Zeichnung nicht zeigt, Luftfederbälge einer in üblicher Weise gestalteten Luftfederung befestigt. Üblicherweise stützen sich derartige Luftfederbälge von unten gegen den Fahrzeugrahmen ab.

Jeder Achslenker 5 ist in einer Achsaufnahme 11 mit dem Achskörper der Fahrzeugachse verbunden. Der Achskörper, vorzugsweise ein Achsrohr, ist von der linken bis zur rechten Fahrzeugseite durchgehend gestaltet und trägt an seinen beiden Enden die Radlagerungen der Fahrzeugräder. Zwischen dem Achslenker 5 und der Stütze 2 befindet sich ein Stoßdämpfer, wozu Stütze und Achslenker mit Aufnahmebuchsen 12 für den Stoßdämpfer versehen sind. Zur Einstellung der Spur und des Vorlaufs der Fahrzeugachse sind die Stützen 2 mit Justiervorrichtungen 20 versehen.

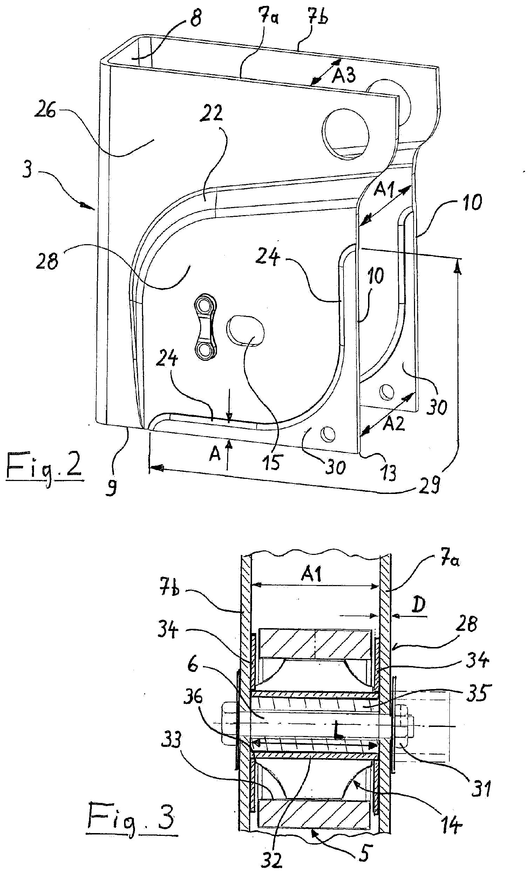

Der in Fig. 2 dargestellte, im Querschnitt U-förmig gestaltete Grundkörper 3 der Stütze 2 setzt sich aus den beiden zueinander im Wesentlichen parallelen Seitenwänden 7a, 7b und einer Querwand oder Stirnwand 8 zusammen. Die Seitenwände 7a, 7b sind mit in Fahrtrichtung und im Wesentlichen horizontal verlaufenden Öffnungen 15 zum Hindurchführen des Bolzens 6 versehen.

Die Stirnwand 8 des Stützengrundkörpers 3 weist nach vorne, also in Fahrtrichtung. Der Grundkörper ist, solange er nicht mit dem Chassis verschweißt ist, nach hinten, nach unten und nach oben offen. Die Seitenwände 7a und 7b erstrecken sich bis zu einem frei auslaufenden unteren Rand 9 und einem ebenfalls frei auslaufenden rückwärtigen Rand 10, deren Übergang 13 hier rechtwinklig-eckig ist, aber auch gerundet sein kann oder ein von einem rechten Winkel abweichender, winkliger Übergang sein kann.

In fertigungstechnisch vorteilhafter Ausgestaltung ist der Grundkörper 3 einteilig, indem alle seine Wände, also die Seitenwände 7a, 7b und die vordere Stirnwand 8, Abschnitte ein- und desselben Blechstreifens sind. Dieser Blechstreifen aus z.B. Stahlblech von 6 mm Materialdicke wird in einem Kaltumformprozess, z.B. in einem Stanz- oder Stanz-Biege-Prozess zu dem in Fig. 2 wiedergegebenen Blechformteil umgestaltet. Dies geschieht in einem einzigen Fertigungsschritt.

Die Seitenwände 7a und 7b erstrecken sich, ausgehend von der Stirnwand 8, in Grundbereichen 26 mit einem gegenseitigen Abstand A3 nach hinten. Dieser Abstand A3 ist möglichst gering ausgeführt, um die Anschließbarkeit des oberen Randes 4 der Stütze an einen Hauptlängsträger des Fahrzeugchassis, welcher ebenfalls möglichst schmal ausgeführt ist, zu ermöglichen. Innerhalb eines Fertigungsschrittes werden hiervon ausgehend Seitenwandbereiche 28, welche sich um die Öffnung 15 herum befinden, entlang von Übergängen 22 auf einen Abstand A1 aufgeweitet, der größer als der Abstand A3 ist.

Ebenso und im selben Fertigungsschritt werden die derart zueinander aufgeweiteten Seitenwandbereiche 28 an weiteren Übergangen 24 zu frei auslaufenden Wandabschnitten 30 mit einem gegenseitigen Abstand A2 aufgeweitet, der nochmals größer als der Abstand A1 ist. Die frei auslaufenden Wandabschnitte 30 erstrecken sich jeweils über einen Randabschnitt 29 der Seitenwand von einer Länge, die von dem unteren Rand 9 bis in den rückwärtigen Rand 10 der Seitenwand 7a , 7b reicht.

Der Abstand A zwischen den Rändern 9, 10 und dem ersten Übergang 24 beträgt das Dreifache der Dicke D des Blechs, aus dem der Grundkörper 3 geformt ist. Die Dicke D beträgt bei Verwendung eines Stahlblechs 6 mm.

Gemäß Fig. 2 erstreckt sich der Wandabschnitt 30 über etwa drei Viertel der Länge des unteren Randes 9, und zugleich über etwa zwei Drittel der Höhe des rückwärtigen Randes 10.

Der Abstand A1 der Seitenwandbereiche 28 entspricht im Wesentlichen der Länge L einer Stahlbuchse 32 (Fig. 3) der Gummi-Stahl-Buchse 14. Gleichzeitig ist die Länge L der Stahlbuchse 32 die größte Breite der von unten oder von hinten her in die Stütze 2 einzusetzenden Achslenker-Baugruppe. Ist daher der Achslenker 5 einmal zwischen den Seitenwänden der Stütze 2 positioniert, können die auf den Achslenker 5 wirkenden Lasten über die unmittelbar von innen an beiden Seitenwänden 7a, 7b anliegende Stahlbuchse 32 direkt auf die Seitenwände übertragen werden.

Jedoch würde das Einführen des Achslenkers 5 in die Stütze 2 durch die sich entsprechenden Maße A1 und Länge L der Buchse 32 durch fehlendes Spiel zwischen der Buchse 32 und den Seitenwänden 7a, 7b zumindest erschwert. Die ersten Übergänge 24 jedoch weiten den Abstand A1 auf den größeren Abstand A2 in den Wandabschnitten 30 auf, so dass diese, bei ausreichender Breite, zusammen mit den Übergängen 24 als eine Art Einführhilfe beim Zusammenbau fungieren. Dazu sind die ersten Übergänge 24 abgerundet und schräg, d. h. ohne Kante, ausgeformt. Die ersten Übergänge 24 begrenzen den Wandabschnitt 30. Die Übergänge 24 setzen sich aus zwei geradlinigen Abschnitten parallel zu dem unteren Rand 9 und dem rückwärtigen Rand 10 zusammen, sowie einem diese verbindenden Mittelabschnitt von viertelkreisförmiger Gestalt.

Fig. 3 zeigt in einem vertikalen Schnitt die Stütze 2, die durch das Auge 33 des Achslenkers 5 gebildete Achslenkeröffnung, den Bolzen 6 sowie ferner die Stahl-Gummi-Buchse 14, deren Gummi in dem Lenkerauge 33 sitzt, und durch deren Stahlbuchse 32 der Bolzen hindurchführt. Es handelt sich bei Fig. 3 um dem montierten Zustand des Achslenkers 5 in der Stütze 2, in dem die Stahlbuchse 32 über den mit einer Mutter 31 versehenen Schraubbolzen 6 direkt, d. h. ohne dazwischen angeordnete Verschleißscheiben, gegen die Seitenwände 7a, 7b verspannt ist. Zwischen dem Bolzen 6 und dem Innenmantel der Stahlbuchse 32 ist noch eine Kunststoffbuchse 35 angeordnet.

Zwischen dem Achslenker 5 und den Innenseiten der Seitenwände 7a, 7b sind jeweils Verschleißscheiben 34 angeordnet. Die zwei aus Metall oder aus Kunststoff bestehenden Verschleißscheiben 34 weisen eine derart große Mittelöffnung 36 auf, dass sie die Stahlbuchse 32 ringförmig umgeben. Es hat sich herausgestellt, dass der wesentliche Anteil des durch Reibung verursachten Verschleißes der Stütze 2 sich nicht im Bereich der Anlage der Stahlbuchse 32 innen an den Seitenwänden 7a, 7b, sondern weiter radial außen im Bereich des Auges 33 des Achslenkers 5 ergibt, und daher die beschriebene Positionierung der Verschleißscheiben 34 von Vorteil ist.

Diese Positionierung der Verschleißscheiben 34 ermöglicht es zudem, den Montageschritt des nachträglichen Einfügens der Verschleißscheiben wie bei der DE 201 04 753 U1 oder des vorab Einschweißens der Verschleißscheiben wie bei der EP 0 504 593 B1 einzusparen. Stattdessen werden die Verschleißscheiben 34 bereits vor dem Einsetzen des Achslenkers 5 mit ihren Mittelöffnungen 36 auf die Enden der Stahlbuchse 32 aufgesetzt, und dann gemeinsam mit dem Achslenker 5 von unten oder von hinten her in die Stütze 2 eingeführt.

Vorstehend ist die Erfindung anhand einer luftgefederten Fahrzeugachse eines Nutzfahrzeuganhängers beschrieben. Sie lässt sich in gleicher Weise auch bei anderen Achsbauarten einsetzen, z. B. bei einer Fahrzeugachse, welche durch Blattfedern oder Blattfederpakete gegenüber dem Fahrzeugrahmen abgestützt ist.

### Bezugszeichenliste

- 2: Stütze
- 3: Stützengrundkörper
- 4: Rand
- 5: Achslenker
- 6: Bolzen
- 7a: Seitenwand
- 7b: Seitenwand
- 8: Querwand, Stirnwand
- 9: unterer Rand
- 10: rückwärtiger Rand
- 11: Achsaufnahme
- 12: Aufnahmebuchse für Bolzen des Stoßdämpfers
- 13: Übergang
- 14: Stahl-Gummi-Buchse
- 15: Öffnung
- 20: Justiervorrichtung
- 22: zweiter Übergang
- 24: erster Übergang
- 26: Grundbereich
- 28: Seitenwandbereich
- 29: Randabschnitt
- 30: Wandabschnitt
- 31: Mutter
- 32: Buchse, Stahlbuchse
- 33: Auge
- 34: Versschleißscheibe
- 35: Kunststoffbuchse
- 36: Mittelöffnung
- A: Abstand
- A1, A2, A3: Abstände
- L: Länge
- D: Blechdicke

## Patentansprüche

1. Abstützung zur schwenkbaren Lagerung des Achslenkers (5) einer Fahrzeugachse, mit einem Stützengrundkörper (3) aus zwei über eine in Fahrtrichtung vorne angeordnete Stirnwand (8) miteinander verbundenen Seitenwänden (7a, 7b), die jeweils versehen sind mit
- einer Öffnung (15) für einen die Schwenkachse bildenden, quer durch die Seitenwände (7a, 7b) und den dazwischen einsetzbaren Achslenker (5) hindurchführenden Bolzen (6),
- einem Randabschnitt (29), der von dem unteren Rand (9) bis in den rückwärtigen Rand (10) der Seitenwand (7a, 7b) reicht und als frei auslaufender Wandabschnitt (30) ausgebildet ist,
wobei zumindest im Bereich der Randabschnitte (29) die Wandabschnitte (30) zu einem gegenseitigen Abstand (A2) aufgeweitet sind, der größer als der Abstand (A1) der Seitenwandbereiche (28) um die Öffnungen (15) herum ist und der Stützengrundkörper (3) als Blechformteil ausgebildet ist, **dadurch gekennzeichnet, dass** ein erster Übergang (24) zwischen den Seitenwandbereichen (28) mit dem Abstand (A1) zu den Wandabschnitten (30) mit dem Abstand (A2) ausschließlich abgerundet und kantenlos gestaltet ist.

2. Abstützung nach Anspruch 1, **dadurch gekennzeichnet, dass** die Wandabschnitte (30) ausschließlich an die Seitenwandbereiche (28) angrenzen, deren Abstand (A1) der Länge (L) einer den Bolzen (6) umgebenden Stahlbuchse (32) des Achslenkers (5) entspricht.

3. Abstützung nach Anspruch 1, oder 2, **dadurch gekennzeichnet, dass** die Seitenwände (7a, 7b) jeweils einen Grundbereich (26) mit einem Abstand (A3) aufweisen, welcher in einem zweiten Übergang (22) zu dem Seitenwandbereich (28) aufgeweitet ist.

4. Abstützung nach einem der vorangehenden Ansprüche, **dadurch gekennzeichnet, dass** jeder Wandabschnitt (30) als eine zusammenhängende Fläche mit zwei linienförmigen und einem viertelkreisförmigen Übergang (24) ausgebildet ist.

5. Abstützung nach einem der vorangehenden Ansprüche, **dadurch gekennzeichnet, dass** die Blechdicke (D) des Stützengrundkörpers (3) in den Seitenwandbereichen (28) und den Wandabschnitten (30) gleich stark ist.

6. Abstützung nach einem der vorangehenden Ansprüche, **dadurch gekennzeichnet, dass** der Abstand (A) zwischen den Rändern (9, 10) und dem ersten Übergang (24) das Dreifache der Dicke (D) des Blechs beträgt, aus dem der Stützengrundkörper (3) geformt ist.

7. Abstützung nach einem der vorangehenden Ansprüche, **gekennzeichnet durch** eine zwischen dem Bolzen (6) und einem den Bolzen (6) umgebenden Auge (33) des Achslenkers (5) angeordnete Buchse (32), deren Länge (L) im Wesentlichen gleich dem Innenabstand der Seitenwände (7a, 7b) ist.

8. Abstützung nach Anspruch 7, **dadurch gekennzeichnet, dass** zwischen dem Achslenker (5) und der jeweiligen Innenseite der Seitenwände (7a, 7b) jeweils eine Verschleißscheibe (34) angeordnet ist, die mit einer Mittelöffnung (36) die Buchse (32) ringförmig umgibt.

## Claims

1. Support for pivotable mounting of the axle guide (5) of a vehicle axle, having a main supporting body (3) consisting of two side walls (7a, 7b) which are connected to one another by means of an end wall (8) arranged in front in the direction of travel and in each case are provided with
an opening (15) for a bolt (6) which forms the pivot axis and passes transversely through the side walls (7a, 7b) and through the axle guide (5) which can be inserted between them,
an edge portion (29) which reaches from the lower edge (9) into the rear edge (10) of the side wall (7a, 7b) and is configured as a freely extending wall portion (30),
the wall portions (30), at least in the region of the edge portions (29), being widened to a reciprocal spacing (A2) which is greater than the spacing (A1) of the side wall regions (28) around the openings (15), and the main supporting body (3) being formed as a shaped sheet metal part, **characterized in that** a first transition (24) between the side wall regions (28) having the spacing (A1) and the wall portions (30) having the spacing (A2) has an exclusively rounded configuration without edges.

2. Support according to claim 1, **characterized in that** the wall portions (30) exclusively adjoin the side wall regions (28), the spacing (A1) of which corresponds to the length (L) of a steel bushing (32) of the axle guide (5) surrounding the bolt (6).

3. Support according to claim 1 or 2, **characterized in that** the side walls (7a, 7b) in each case have a main region (26) having a spacing (A3) which is widened in a second transition (22) to the side wall region (28).

4. Support according to any of the preceding claims, **characterized in that** each wall portion (30) is configured as a contiguous surface having two linear transitions and one quadrant-shaped transition (24).

5. Support according to any of the preceding claims, **characterized in that** the thickness (D) of the sheet metal of the main supporting body (3) is the same in the side wall regions (28) and the wall portions (30).

6. Support according to any of the preceding claims, **characterized in that** the spacing (A) between the edges (9, 10) and the first transition (24) is three times the thickness (D) of the sheet metal from which the main supporting body (3) is formed.

7. Support according to any of the preceding claims, **characterized by** a bushing (32) arranged between the bolt (6) and an eye (33) of the axle guide (5) surrounding the bolt (6), the length (L) of which bushing is substantially equal to the internal spacing of the side walls (7a, 7b).

8. Support according to claim 7, **characterized in that** a wear plate (34) which surrounds the bushing (32) in an annular manner with a central opening (36) is in each case arranged between the axle guide (5) and the respective inner face of the side walls (7a, 7b).

## Revendications

1. Support destiné au logement pivotant du guide d'essieu (5) d'un essieu de véhicule, comportant un corps de base de support (3) constitué de deux parois latérales (7a, 7b) reliées entre elles par l'intermédiaire d'une paroi frontale (8) disposée à l'avant dans le sens de déplacement, lesquelles parois latérales sont respectivement pourvues
d'une ouverture (15) pour un goujon (6) formant l'axe de pivotement et passant transversalement à travers les parois latérales (7a, 7b) et le guide d'essieu (5) pouvant être inséré entre celles-ci,
d'une section formant rebord (29) qui s'étend depuis le rebord inférieur (9) jusque dans le rebord arrière (10) de la paroi latérale (7a, 7b) et qui est réalisée sous forme de section de paroi (30) se terminant librement,
dans lequel, au moins dans la zone des sections formant rebords (29), les sections de parois (30) sont écartées d'une distance (A2) réciproque qui est supérieure à la distance (A1) entre les zones de parois latérales (28) autour des ouvertures (15), et le corps de base de support (3) est réalisé sous forme de pièce usinée en tôle, **caractérisé en ce qu'**une première jonction (24) entre les zones de parois latérales (28) comportant la distance (A1) et les sections de parois (30) comportant la distance (A2) est conçue exclusivement de manière arrondie et sans arêtes.

2. Support selon la revendication 1, **caractérisé en ce que** les sections de parois (30) sont exclusivement adjacentes aux zones de parois latérales (28) dont la distance (A1) correspond à la longueur (L) d'une douille en acier (32) du guide d'essieu (5), laquelle douille en acier entoure le goujon (6).

3. Support selon la revendication 1, ou 2, **caractérisé en ce que** les parois latérales (7a, 7b) présentent respectivement une zone de base (26) comportant une distance (A3) qui est élargie dans une seconde jonction (22) vers la zone de paroi latérale (28).

4. Support selon l'une des revendications précédentes, **caractérisé en ce que** chaque section de paroi (30) est réalisée sous forme d'une surface continue comportant deux jonctions (24) linéaires et une jonction en quart de cercle.

5. Support selon l'une des revendications précédentes, **caractérisé en ce que** l'épaisseur de tôle (D) du corps de base de support (3) est la même dans les zones de parois latérales (28) et dans les sections de parois (30).

6. Support selon l'une des revendications précédentes, **caractérisé en ce que** la distance (A) entre les rebords (9, 10) et la première jonction (24) est égale à trois fois l'épaisseur (D) de la tôle à partir de laquelle est formé le corps de base de support (3).

7. Support selon l'une des revendications précédentes, **caractérisé par** une douille (32) disposée entre le goujon (6) et un œillet (33) du guide d'essieu (5), lequel oeillet entoure le goujon (6), la longueur (L) de la douille étant sensiblement égale à la distance intérieure entre les parois latérales (7a, 7b).

8. Support selon la revendication 7, **caractérisé en ce que,** entre le guide d'essieu (5) et la face intérieure respective des parois latérales (7a, 7b), respectivement une rondelle d'usure (34) est disposée, laquelle entoure de manière annulaire la douille (32) par une ouverture centrale (36).
